# EUROPEAN PATENT APPLICATION

(11) **EP 4 410 476 A1**
(43) Date of publication of application: **07.08.2024**
(21) Application number: 22875649.0
(22) Date of filing: 23.08.2022
(51) Int. Cl.: B23Q 17/24, B23Q 5/04, H02J 50/10, H02J 50/80

(54) **MACHINE TOOL APPARATUS, AND MACHINE TOOL**

(30) Priority: 29.09.2021 JP 2021158849
(71) Applicant: DMG Mori Co., Ltd., Yamatokoriyama-shi, Nara 639-1160 (JP)
(72) Inventor: YAMAMOTO, Kazuyuki, Sapporo City, Hokkaido 004-0015 (JP)
(74) Representative: Isarpatent
(86) International application number: PCT/JP2022/031640
(87) International publication number: WO 2023/053777

(57) **Abstract**

A device for a machine tool is attachable to an attachment portion of the machine tool and has a part being rotatable with a rotatable member in the attachment portion. The device for the machine tool includes: a fixed portion including a power receiving portion for receiving power from the attachment portion in a non-contact manner, the fixed portion being attachable to a non-rotating portion of the attachment portion in a fixed manner; a rotatable portion to be attached so that the rotatable portion is rotatable with the rotatable member, and including a first connector connected with the power receiving portion via a first power line; and a function portion including a second connector to be coupled with the first connector, and a device that operates on power obtained from the power receiving portion via a second power line connected to the second connector, the function portion turning with rotation of the rotatable portion in a same direction as a rotating direction of the rotatable portion. The function portion is attachable to the rotatable portion.

## Description

### Technical Field

The present invention relates to a device for a machine tool attachable to the machine tool and the like.

### Background Art

Examples of machine tools include a machine that allows a tool to be attached to a spindle and machines a workpiece with the tool, a machine that allows a plurality of tools to be attached to a turret and machines a workpiece while rotating the workpiece, an additive manufacturing machine that machines a material while melting the material with a laser, and a combined machine including these functions in combination.

Recently, in addition to machining, other functions that can be performed by machine tools, such as observation of a workpiece with a camera attached to a machine tool, have been increasing. For achieving these functions, devices for machine tools which are attachable to the machine tools have been developed (Patent Literature 1).

### Related Art List

Patent Literature 1: JP 6656707 B

### Summary

### Technical Problem

Patent Literature 1 discloses a camera as a device for a machine tool attachable to the machine tool. The camera for a machine tool according to Patent Literature 1 includes a battery because a spindle of a machine tool on which a tool is to be attached does not have a power source for power supply. Thus, a camera for a machine tool is likely to be large in size.

Furthermore, a camera for a machine tool only outputs data of images taken for observation. Thus, data processing such as image processing is performed after the data are transmitted to the outside, and the processing is only performed by an external computer.

In addition, for performing measurement, which is to be more accurate than observation, such measures as increasing data per one imaging operation or increasing the number of times of imaging may be taken. In order to meet sufficient imaging conditions for measurement, however, it is necessary to drive a camera for a long time and therefore to mount a large-capacity battery. From this viewpoint as well, it is difficult to reduce the size of a camera for a machine tool.

Furthermore, a reason for which the use of a battery is not suitable is that the limited remaining battery life needs to be managed on the assumption of continuous automatic operation. In some situations, a camera for a machine tool may run out of battery at a timing when the camera is to be used.

### Solution to Problem

In view of the above, the present invention provides a device described in the claims.

### Advantageous Effects of Invention

The present invention enables data processing in a device for a machine tool.

### Brief Description of Drawings

FIG. 1 is an external view of the inside of a machine tool.
FIG. 2 is a perspective view of an example of a device, for a machine tool, that is attachable to the machine tool and rotatable.
FIG. 3 is a cross-sectional view of an attachment mechanism and a rotation mechanism of a spindle and a device for the machine tool.
FIG. 4 is a cross-sectional view of wires, electric components, and optical components in the device for a machine tool.
FIG. 5 is a cross-sectional view of a cable accommodating portion and a winding portion at a rotation angle of 0 degrees.
FIG. 6 is a cross-sectional view of the cable accommodating portion and the winding portion at a rotation angle of 360 degrees.
FIG. 7 is a diagram of a configuration of electric circuits included the spindle and the device for the machine tool.
FIG. 8 is a diagram illustrating a function portion that is replaceable.
FIG. 9 is a cross-sectional view of wires, electric components, and optical components in a device for a machine tool according to a first modification.
FIG. 10 is a cross-sectional view of wires, electric components, and optical components in a device for a machine tool according to a second modification.
FIG. 11 is a cross-sectional view of wires, electric components, and optical components in a device for a machine tool according to a third modification.
FIG. 12 is an external view of a machine tool.
FIG. 13 is a diagram of wiring between an electric circuit board and an imaging unit.
FIG. 14 is a diagram of a configuration if integrated circuits in a function portion.

### Description of Embodiments

A device for a machine tool attachable to the machine tool and the machine tool according to an embodiment will now be described below with reference to the drawings. In the following description, components that correspond to previously described components will be represented by the same reference numerals as those of the previously described components.

### [Machine Tool]

The present embodiment will be described with reference to a machine tool including an attachment portion (a spindle, a turret, or the like, for example) to which a tool to be used next can be automatically attached by an automatic tool changer (ATC) for replacement of a tool on the basis of an NC program in the process of machining in accordance with the NC program. The attachment portion of the machine tool of the present embodiment is capable of machining a workpiece with a tool attached thereto. A device for a machine tool may also be attached instead of a tool. Thus, a device for a machine tool can be detachably attached to the attachment portion.

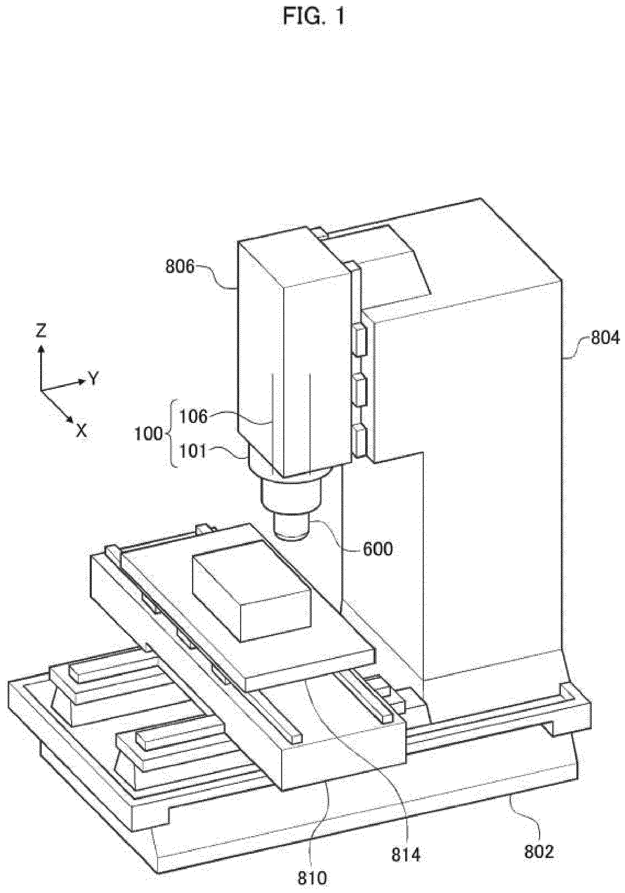

FIG. 1 is an external view of the inside of a machine tool.

The illustrated example of the machine tool is a vertical machining center. The machine tool includes a bed 802, and a column 804 mounted on the bed 802. A spindle head 806 is attached to the column 804. The spindle head 806 is movable in a Z-axis direction (up-down direction). The spindle head 806 has a spindle 100 at a leading end thereof. The spindle 100 includes a rotatable member 106 therein. The rotatable member 106 is rotatable about a rotation axis along the Z-axis direction. The device 600 for the machine tool can be attached to the spindle 100 in a manner that a tool is attached to the rotatable member 106 of the spindle 100.

A saddle 810 that is movable in a Y direction is mounted on the bed 802. A table 814 that is movable in an X direction is mounted on the saddle 810. A workpiece to be machined and measured is placed on the table 814. The machine tool moves the saddle 810 and the table 814 in the X and Y directions to change the positions of the workpiece and the device 600 for the machine tool relative to each other. Similarly, the machine tool moves the spindle head 806 up and down to change the distance between the workpiece and the device 600 for the machine tool.

The spindle 100 is an example of "an attachment portion of a machine tool" to which the device 600 for the machine tool is attached. In a case where the machine tool is a turning center, a turret corresponds to "an attachment portion of a machine tool". The device 600 for the machine tool may be attached to the turret to image a workpiece. Furthermore, an attachment portion may be provided in a multi-tasking machine, and the device 600 for the machine tool may be attached to the attachment portion. In any case, the device 600 for the machine tool is detachably attached to "an attachment portion of a machine tool", and part of the device 600 for the machine tool with "the rotatable member 106 of the attachment portion" is rotatable with respect to the machine tool or the attachment portion. The device 600 for the machine tool attached to the spindle 100 performs predetermined functions (such as imaging, touch measurement, or laser scanning, for example).

The machine tool of the present embodiment includes the attachment portion to which a device for a machine tool can be attached. For example, the attachment portion is a spindle or a turret. In the case of a spindle, the spindle 100 includes a cylindrical portion 101 and the rotatable member 106. According to the structure of the present embodiment, the device 600 for the machine tool that is attachable to the machine tool can be automatically attached to and detached from the attachment portion of the machine tool by the automatic tool changer. The machine tool of the present embodiment is an example, and the machine tool is not limited to the aforementioned structure.

### Device 600 for Machine Tool

Examples of the device for a machine tool that is attachable to and detachable from the machine tool include an imaging device, a touch probe, a laser scanner, an angle head, a tool with an angle head, an electric tool, a tool with functions, an ultrasonic generator, and a laser oscillator.

The device 600 for the machine tool of the present embodiment is a device that can be detachably and rotatably attached to the machine tool among the aforementioned examples of the device for a machine tool.

The device 600 for the machine tool includes an electric component such as various sensors, such as an image sensor (image pickup device), a temperature sensor, or a piezoelectric sensor, or oscillators such as a laser oscillator or a millimeter-wave oscillator, for example. Alternatively, the device 600 for the machine tool may include a mechanical component such as an actuator or a motor. Needless to say, the device 600 for the machine tool may include one of these electric components or more than one of them, or may include an electric component and a mechanical component. Alternatively, the device 600 for the machine tool may be in a form of a module further including a circuit such as a large scale integration (LSI) or a central processing unit (CPU) for processing signals output from the electric components and the mechanical components.

For using the device 600 for the machine tool, power needs to be supplied to an electric component or a mechanical component driven by power. In a case where the device 600 for the machine tool is an imaging device, the device 600 includes an imaging unit, as a function portion, including an image sensor (such as a complementary MOS (CMOS)), an electric circuit for controlling the image sensor, and the like. Devices in the function portion operate with power supplied from an external power supply by using non-contact power supply means. For imaging performed by the imaging unit, operation instructions for imaging transmitted from a cable are processed by the CPU or the LSI, which is an electric circuit, and control signals are transmitted from the CPU or the LSI to the imaging unit. Image data taken by the imaging unit may be transmitted without any processing to the outside of the device 600 for the machine tool. However, image data taken by the imaging unit are preferably subjected to necessary image processing by a main circuit 570 in the device 600 for the machine tool and then transmitted to an external device (such as a computer in the machine tool or a server outside the machine tool) external to the device 600 for the machine tool by non-contact communication means.

### Embodiment

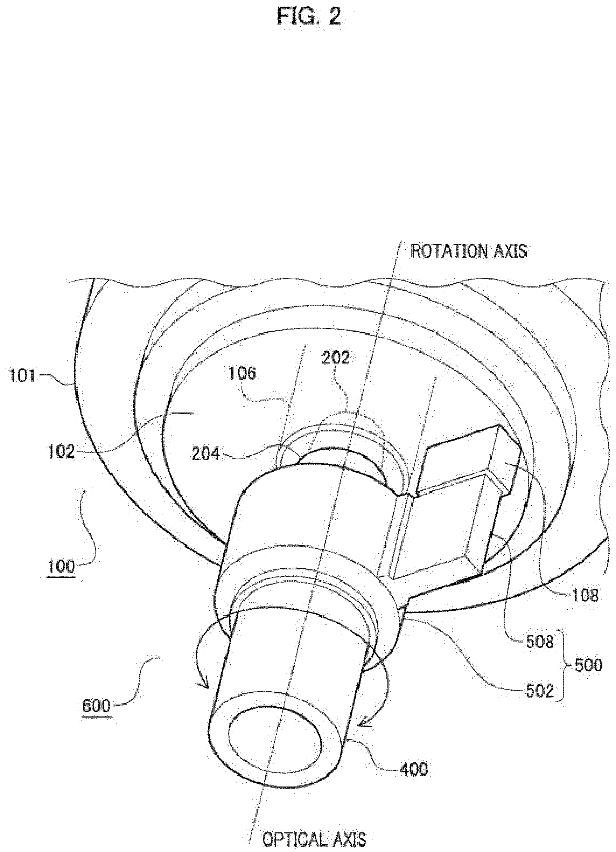

FIG. 2 is a perspective view of an example of the device 600, for a machine tool, that is attachable to the machine tool and rotatable.

### [Outline of device 600 for machine tool]

The device 600 for the machine tool of the present embodiment is an image probe attached to the machine tool and used for imaging of a workpiece.

The device 600 for the machine tool has a shank 202 on the side of the spindle 100 in a posture in which the device 600 is attached to the spindle 100. The shank 202 is fitted to the rotatable member 106 of the machining center, which is the machine tool, whereby the device 600 for the machine tool is attached to the spindle 100. The device 600 for the machine tool is attached in the same manner as a tool. The automatic tool changer of the machine tool can also hold a grip 204 to move the device 600 for the machine tool and attach the device 600 to the rotatable member 106.

### [Outline of function portion 400]

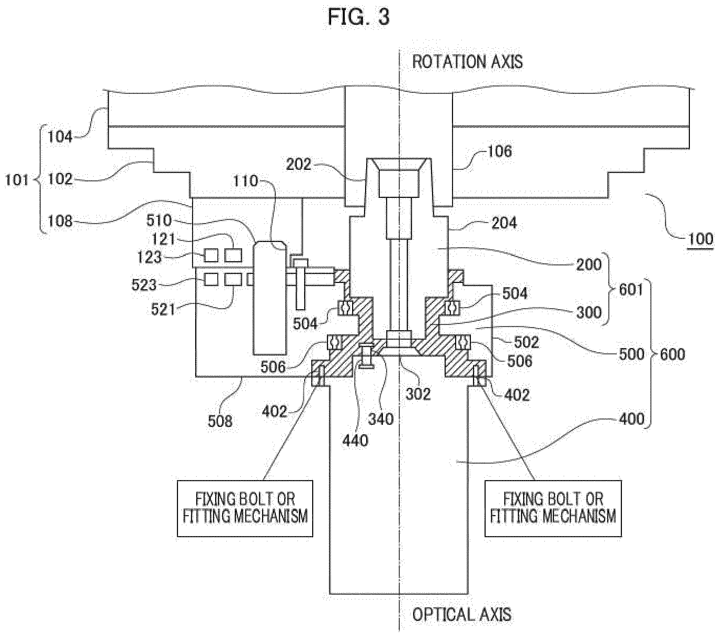

The device 600 for the machine tool includes a function portion 400 on a side opposite the side attached to the attachment portion in a posture in which the device 600 is attached to the attachment portion. The function portion 400 is a unit capable of performing a predetermined function. An example of the function portion 400 in the present embodiment includes an image sensor and an optical system (a lens, a mirror, and a splitter, for example), and has an imaging function of performing imaging with the image sensor upon receiving an imaging instruction. In the case of the device 600 for the machine tool in this example, the imaging unit, the lens, and lighting equipment are included. Note that the device 600 for the machine tool includes a connecting portion, which is not illustrated in FIG. 2. The connecting portion will be described later with reference to FIG. 3.

When the rotatable member 106 turns about the rotation axis in a range of 0 to 360 degrees, a shank portion 200, the connecting portion 300, and the function portion 400 also turn together but a fixed portion 500 does not turn. Thus, the function portion 400 can change its orientation around the rotation axis in a range of 0 to 360 degrees. Thus, the orientation of imaging can be changed in a range of 0 to 360 degrees. Note that the rotation axis of the rotatable member 106 corresponds to the center line of the rotatable member 106 having a columnar shape. The optical axis of the function portion 400 of the present embodiment is described as corresponding to an extension of the rotation axis of the rotatable member 106, but the optical axis of the function portion 400 is not limited thereto. For example, in a case where the function portion includes three imaging units, the imaging units may each be arranged at a position where the optical axis is parallel to the rotation axis but is not identical to the rotation axis.

### [Outline of fixed portion 500]

The device 600 for the machine tool includes the fixed portion 500. The fixed portion 500 is mounted on the cylindrical portion 101 of the spindle 100 in a fixed manner. Thus, when the rotatable member 106 rotates, the fixed portion 500 does not turn with a rotatable portion 601 including the shank portion 200 and the connecting portion 300. A cylindrical portion 502 of the fixed portion 500 rotatably supports the rotatable portion 601. The fixed portion 500 is therefore arranged to surround the rotatable portion 601 as viewed along the rotation axis of the rotatable portion 601. The fixed portion 500 of the device 600 for the machine tool is attached to non-rotating portion of the spindle 100 in a fixed manner.

### [Outline of stopper block 108]

The fixed portion 500 includes an extension portion 508 protruding from a side face of the cylindrical portion 502. The extension portion 508 is stopped by (engaged with and stopped by) a stopper block 108 protruding from a front cover 102 of the spindle 100. The stopper block 108 is a member that is part of the cylindrical portion 101 of the spindle 100 and that does not turn when the rotatable member rotates. The extension portion 508 and the stopper block 108 prevent the fixed portion 500 of the device 600 for the machine tool from corotating with the rotatable member. In other words, the fixed portion 500 is attached to the stopper block 108 (an example of a non-rotating portion) that is part of the cylindrical portion 101 of the spindle 100. Means for stopping will be described with reference to FIG. 3. In addition, a non-contact power supply means and a non-contact communication means are provided at the stopper block 108 and the extension portion 508.

### [Rotatable portions and non-rotating portions]

Rotatable portions and non-rotating portions of the device 600 for the machine tool are sorted out as follows. With the rotation of the rotatable member 106 of the machine tool, the shank 202, the grip 204, and the function portion 400 of the device 600 for the machine tool turns. In addition, the connecting portion 300 (see FIG. 3) of the device 600 for the machine tool, which will be described later also turns. The rotation axis of the shank 202, the grip 204, the connecting portion, and the function portion 400 is coincident with the extension of the rotation axis of the rotatable member 106. In contrast, the cylindrical portion 101 of the spindle 100 (part of the cylindrical portion 101 includes the front cover 102, a housing 104, the stopper block 108, and others) and the fixed portion 500 of the device 600 for the machine tool (including the cylindrical portion 502, the extension portion 508, and others) do not turn.

FIG. 3 is a cross-sectional view of an attachment mechanism and a rotation mechanism of the spindle 100 and the device 600 for the machine tool.

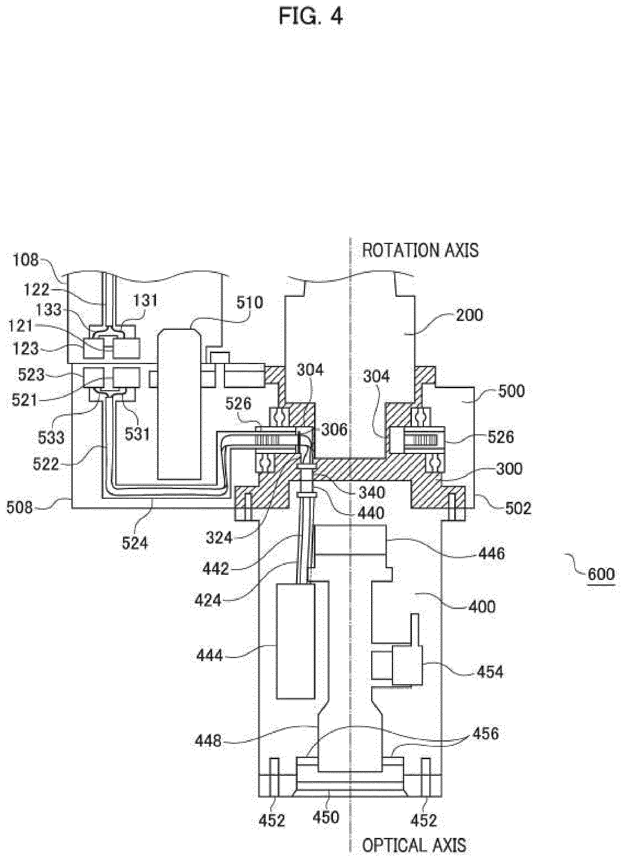

The attachment mechanism and the rotation mechanism are mainly shown, but illustration of electric structures and optical structures is omitted. Wires, electric components, optical components, and the like in the device 600 for the machine tool will be described later with reference to FIG. 4.

### [Structure of spindle 100]

The rotatable member 106 is rotatably supported by the housing 104, and driven by a servomotor to rotate. The front cover 102 is provided on a front end of the spindle 100 and covers the housing 104. A front end of the rotatable member 106 sticks out through an opening of the front cover 102. The function portion 400 can be adjusted to a predetermined rotation angle by turning the rotatable member 106 at a predetermined rotation angle by the servomotor. The cylindrical portion 101 includes all the members of the spindle 100 (the front cover 102, the housing 104, the stopper block 108 and others) other than the rotatable member 106. The whole cylindrical portion 101 corresponds to a non-rotating portion of the spindle 100.

### [Rotatable portion 601]

The device 600 for the machine tool includes the rotatable portion 601 constituted by the shank portion 200 and the connecting portion 300. The rotatable portion 601 is attached to the machine tool in such a manner that the rotatable portion 601 is rotatable with the rotatable member 106. In addition, the function portion 400 is attached to the rotatable portion 601. Thus, the function portion 400 turns with the rotation of the rotatable portion 601 in the same direction as the rotating direction of the rotatable portion 601. The rotatable portion 601 of the device 600 for the machine tool is attached to the spindle 100 so that the rotatable portion 601 is rotatable with the rotatable member 106.

Specifically, the shank portion 200 includes the shank 202 fixed to the rotatable member 106 and the grip 204 to be held by the automatic tool changer. The connecting portion 300 is fixed to the shank portion 200 with a tool holder attaching bolt 302. The connecting portion 300 is rotatably supported inside the fixed portion 500.

The function portion 400 is fixed to the connecting portion 300 with bolts 402. Thus, the function portion 400 is attachable to and detachable from the rotatable portion 601. As a fixing method alternative to that using the bolts 402, a fitting mechanism that is a mechanical mechanism may be used to detachably attach the function portion 400. Note that the connecting portion 300 has a first connector 340 on its face coming in contact with the function portion 400, and the function portion 400 has a second connector 440 at a position facing the first connector 340. When the function portion 400 is fixed to the connecting portion 300, the first connector 340 and the second connector 440 are connected with each other. The first connector 340 and the second connector 440 are connectors each having a communication terminal to be connected to a communication line and a power terminal to be connected to a power line. When the first connector 340 and the second connector 440 are connected with each other, the communication lines are electrically connected and the power lines are electrically connected. Spring connectors may be used for the first connector 340 and the second connector 440. Contact components, however, are not limited to these examples.

### [Fixed portion 500]

The device 600 for the machine tool includes the fixed portion 500 constituted by the cylindrical portion 502 and the extension portion 508. The cylindrical portion 502 of the fixed portion 500 rotatably supports the connecting portion 300 with a first bearing 504 and a second bearing 506. That is, the cylindrical portion 502 corresponds to a housing accommodating the rotatable connecting portion 300 as a mechanical element.

The extension portion 508 of the fixed portion 500 has a cylindrical positioning portion 510. The positioning portion 510 is fitted to a non-rotating portion 110 formed on the stopper block 108 of the spindle 100, serves as a guide for attachment, and fixes the fixed portion 500 so as not to turn. In this manner, the spindle 100 attaches the fixed portion 500 of the device 600 for the machine tool to the stopper block 108 (an example of a non-rotating portion) so that the fixed portion 500 is fixed to the stopper block 108. In addition, the stopper block 108 has a power supply portion 121 on its face coming in contact with the extension portion 508, and the extension portion 508 has a power receiving portion 521 at a position facing the power supply portion 121. When the positioning portion 510 is inserted into the non-rotating portion 110, the power supply portion 121 and the power receiving portion 521 come close to each other. When the power supply portion 121 and the power receiving portion 521 have become close to each other, the power supply portion 121 supplies power to the power receiving portion 521 in a non-contact manner. Non-contact power supply is electromagnetic inductive power supply, for example. In this manner, the fixed portion 500 includes the power receiving portion 521 that receives power from the spindle 100 in a non-contact manner. The spindle 100 includes the power supply portion 121 that transmits power to the power receiving portion 521 in a non-contact manner.

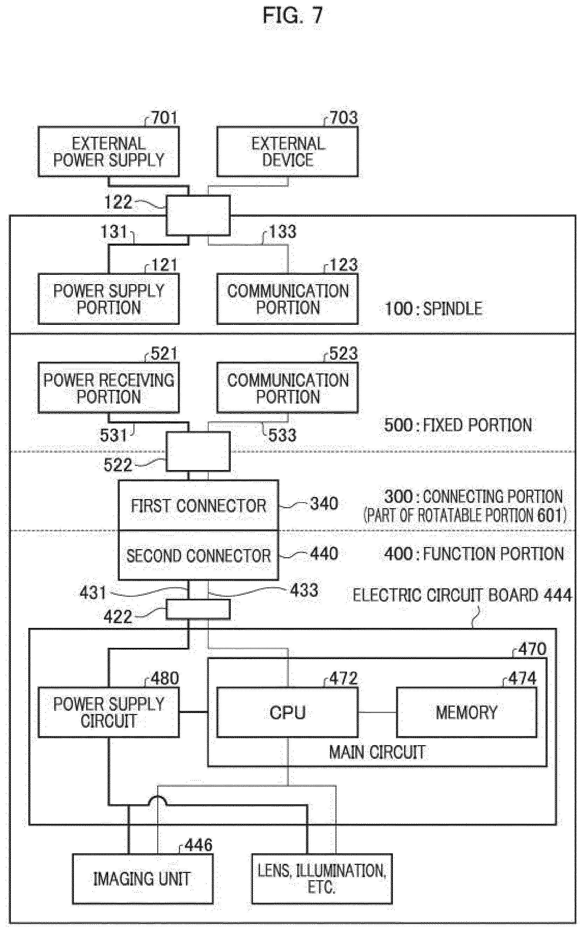

Furthermore, the stopper block 108 has a communication portion 123 on its face coming in contact with the extension portion 508, and the extension portion 508 has a communication portion 523 at a position facing the communication portion 123. When the positioning portion 510 is inserted into the non-rotating portion 110, the communication portion 123 and the communication portion 523 come close to each other. When the communication portion 123 and the communication portion 523 have become close to each other, the communication portion 123 and the communication portion 523 can communicate with each other bi-directionally in a non-contact manner. The bi-directional non-contact communication is near field communication such as millimeter wave radio communication, for example. Details thereof will be described later with reference to FIG. 7. The fixed portion 500 thus has the communication portion 523 that can communicate with the spindle 100 in a non-contact manner.

When the rotatable member 106 of the spindle 100 rotates, the rotatable portion 601 (the shank portion 200 and the connecting portion 300) and the function portion 400 of the device 600 for the machine tool rotate integrally, but the fixed portion 500 of the device 600 for the machine tool that is stopped by the stopper block 108 does not turn. According to the structure of the device 600 for the machine tool alone, when the fixed portion 500 is fixed, the rotatable portion 601 and the function portion 400 are rotatable relative to the fixed portion 500. Conversely, according to the structure of the device 600 for the machine tool alone, when the rotatable portion 601 and the function portion 400 are fixed, the fixed portion 500 is rotatable relative to the rotatable portion 601.

FIG. 4 is a cross-sectional view of wires, electric components, and optical components in the device 600 for the machine tool.

A cable 122 passing through the stopper block 108 includes a power line 131 connected to the power supply portion 121 and a communication line 133 connected to the communication portion 123. The power line 131 is connected with an external power supply. The communication line 133 is connected with an external device (an information processing device such as a computer, for example). A cable 522 including a first power line 531 connected to the power receiving portion 521 and a first communication line 533 connected to the communication portion 523 passes through a wireway 524 and a cable accommodating portion 526 and is connected to the inside of the connecting portion 300.

### [Cable accommodating portion 526]

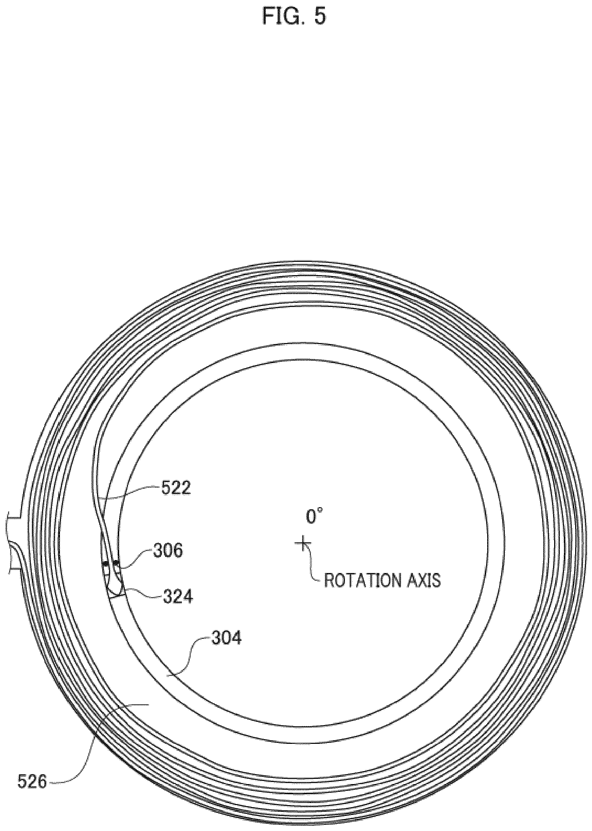

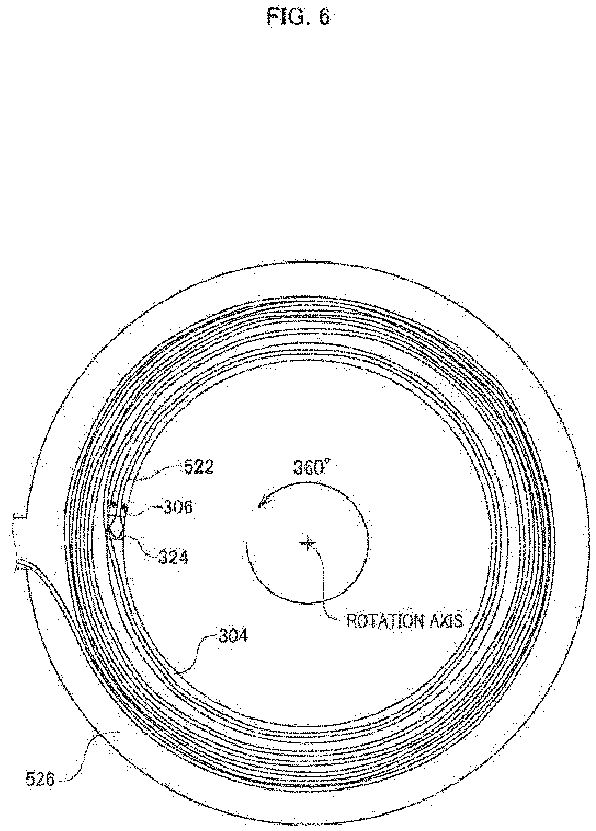

The fixed portion 500 includes the cable accommodating portion 526. The cable accommodating portion 526 forms an annular space around the rotation axis of the rotatable portion 601 at the boundary of the fixed portion 500 with the rotatable portion 601 (see FIGS. 5 and 6). The cable accommodating portion 526 accommodates the cable 522 that is wound a plurality of turns. As will be described later with reference to FIG. 5, a margin is also given to the turns of the cable 522. That is, a gap is provided in the cable accommodating portion 526 in such a manner that the shape of the cable 522 wound a plurality of turns can be changed depending on the rotation angle of the rotating portion 601.

### [Winding portion 304]

The connecting portion 300 includes a winding portion 304 having a grasping portion 306. A point in the middle of the cable 522 extending from the cable accommodating portion 526 to the inside of the connecting portion 300 is grasped by the grasping portion 306 of the connecting portion 300 (held in a grasped state). The grasping portion 306 is provided inside the winding portion 304 that forms an annular space integrated with the cable accommodating portion 526, and rotates as part of the rotating portion 601. This allows the grasping portion 306 to operate to circularly move the point in the middle of the cable 522. An end of the cable 522 fixed to the grasping portion 306 passes through a wireway 324 extending forward from the winding portion 304 and is connected to the first connector 340 provided on an end face of the connecting portion 300. Details of the cable accommodating portion 526, the grasping portion 306, and the winding portion 304 will be described later with reference to FIGS. 5 and 6.

The first connector 340 and the second connector 440 each have the communication terminal to be connected to the communication line and the power terminal to be connected to the power line. When the communication terminals of the first connector 340 and the second connector 440 are connected with each other, the communication lines are electrically connected. In addition, when the power terminals of the first connector 340 and the second connector 440 are connected with each other, the power lines are electrically connected. A cable 442 connected to the second connector 440 passes through a wireway 424 and is connected to an electric circuit board 444. The cable 442 includes a communication line and a power line. In this manner, the rotatable portion 601 includes the first connector 340 connected with the power receiving portion 521 via the first power line 531. The first connector 340 is connected with the communication portion 523 via the first communication line 533. The function portion 400 includes the second connector 440 that can be coupled with the first connector 340.

### [Optical components]

The function portion 400 includes, as optical components, an imaging unit 446 and a lens 448. The imaging unit 446 includes an image sensor (a CMOS, for example) that visualizes received light. The lens 448 is a telecentric lens, for example. A lens cover 450 is attached to an end of the function portion 400 with a bolt 452. A coaxial epi-illumination 454 and a ring illumination 456 are further provided in the function portion 400. Either one or both of the coaxial epi-illumination 454 and the ring illumination 456 emits/emit light when imaging is performed. The electric circuit board 444, the imaging unit 446, the lens 448, the coaxial epi-illumination 454, and the ring illumination 456 operate on power supplied by PoE. As described above, an example of the function portion 400 is an imaging unit including an image sensor (a CMOS) and a lens, which may be called a camera.

FIG. 5 is a cross-sectional view of the cable accommodating portion 526 and the winding portion 304 at a rotation angle of 0 degrees.

FIG. 5 shows cross sections of the cable accommodating portion 526 and the winding portion 304 as viewed from the spindle 100.

### [Cable accommodating portion 526]

As described above, the cable accommodating portion 526 forms an annular space around the rotation axis of the rotatable portion 601 at the boundary of the fixed portion 500 with the rotatable portion 601. The cable accommodating portion 526 accommodates the cable 522 that is wound a plurality of turns (five turns in this example). The space of the cable accommodating portion 526 in the fixed portion 500 has such a width that allows accommodation of about ten turns of the cable 522. Thus, the space also has a margin for the plurality of turns of the cable 522.

### [Winding portion 304]

The winding portion 304 in the connecting portion 300 forms an annular space without separation from the space of the cable accommodating portion 526. The space of the winding portion 304 can accommodate one turn of the cable 522. The grasping portion 306 in the winding portion 304 grasps a point in the middle of the cable 522. The cable accommodating portion 526 does not turn, but the winding portion 304 turns as part of the rotatable portion 601. Thus, as the rotatable portion 601 and the function portion 400 turns 360 degrees, the grasping portion 306 makes one turn around the circle.

### [Shape of cable 522]

The shape of the cable 522 from the wireway 524 in the fixed portion 500 toward the wireway 324 in the connecting portion 300 will be explained. The cable 522 inserted in the wireway 524 makes five turns in the cable accommodating portion 526 from the outer side toward the inner side in the space. The cable 522 can be loose with a margin in the cable accommodating portion 526. The cable 522 is grasped by the grasping portion 306 at a position in the winding portion 304 just after the five turns. The cable 522 then changes its direction, passes through the wireway 324 and is connected to the first connector 340.

### [Rotation angle: 0 degrees]

As illustrated in FIG. 5, assume that the rotation angle is 0 degrees when the grasping portion 306 is closest to the entrance from the wireway 524. When the rotation angle is 0 degrees, the cable 522 in the cable accommodating portion 526 is located on the outer side, and the cable 522 is not wound in the winding portion 304.

### [Counterclockwise rotation]

Assume that the rotation angle increases as the rotatable portion 601 and the function portion 400 turn in the counterclockwise direction as viewed from the spindle 100 side. As the rotation angle increases, the grasping portion 306 turns in the counterclockwise direction, and pulls the cable 522 in the cable accommodating portion 526 inward. The pulled cable 522 is thus wound around the winding portion 304. Because the cable 522 in the cable accommodating portion 526 becomes shorter accordingly, the cable 522 as a whole is pulled inward.

### [Rotation angle: 180 degrees]

Although not illustrated, when the rotation angle becomes 180 degrees, the grasping portion 306 moves to the right side opposite the position when the rotation angle is 0 degrees. Thus, the cable 522 is wound a half turn around the winding portion 304. In this state, the first connector 340, the second connector 440, the wireway 424, the cable 442, and the electric circuit board 444 illustrated in FIG. 4 are on the right side in FIG. 4.

### [Rotation angle: 360 degrees]

FIG. 6 is a cross-sectional view of the cable accommodating portion 526 and the winding portion 304 at a rotation angle of 360 degrees.

When the rotation angle is 360 degrees, the first connector 340, the second connector 440, the wireway 424, the cable 442, and the electric circuit board 444 are back to the left side as in FIG. 4. In this state, the cable 522 is wound one turn around the winding portion 304. In addition, the cable 522 in the cable accommodating portion 526 is shifted inward. Because the cable 522 is wound with a margin, no excessive tension is applied to any part of the cable 522 when the rotatable portion 601 turns.

### [Clockwise rotation]

When the rotatable portion 601 and the function portion 400 are turned in the clockwise direction as viewed from the spindle 100 side and the rotation angle thus decreases, the grasping portion 306 turns in the clockwise direction, and pushes the cable 522 toward the inside of the cable accommodating portion 526. Thus, part of the cable 522 wound around the winding portion 304 becomes shorter, and part of the cable 52 accommodated in the cable accommodating portion 526 becomes longer accordingly. As a result, the cable 522 in the cable accommodating portion 526 is shifted back outward. In this manner, no excessive load is applied on the cable 522 even when the rotatable portion 601 and the function portion 400 are turned in the clockwise direction (as viewed from the spindle 100).

### [Function of cable accommodating portion 526]

Because a gap is provided in the cable accommodating portion 526 for the cable 522 wound a plurality of turns as illustrated in FIG. 5, the shape of the cable 522 wound a plurality of turns can be changes depending on the rotation angle of the rotatable portion 601 as illustrated in FIG. 6. Thus, the rotatable portion 601 and the function portion 400 can be turned in a range of 0 to 360 degrees without application of excessive force to the cable 522. Note that, even when the rotatable portion 601 and the function portion 400 are turned, the cable 522 in the wireway 524, the cable 522 in the wireway 324, and the cable 422 in the wireway 424 do not change their shapes. Only part of the cable 522 in the cable accommodating portion 526 and in the winding portion 304 changes its shape with the turning.

FIG. 7 is a diagram of a configuration of electric circuits included in the spindle 100 and the device 600 for the machine tool.

### [Wiring]

An external power supply 701 and a power supply circuit 480 are connected with each other via a feed path including the power line 131, the power supply portion 121, the power receiving portion 521, the first power line 531, the first connector 340, the second connector 440, and a second power line 431. Power is supplied from the external power supply 701 to the power supply circuit 480 via the feed path. An external device 703 (an information processing device, for example) and a CPU 472 are connected with each other via a communication path including the communication line 133, the communication portion 123, the communication portion 523, the first communication line 533, the first connector 340, the second connector 440, and a second communication line 433. The external device 703 and the CPU 472 communicate bi-directionally with each other via the communication path.

### [Flow of power]

The power supply circuit 480 receives power from the external power supply 701, and distributes suitable direct-current (DC) power to each of a main circuit 470, the imaging unit 446, the lens 448, the coaxial epi-illumination 454, and the ring illumination 456. In other words, the power supply circuit 480 supplies necessary power for the respective devices (such as the imaging unit 446, the coaxial epi-illumination 454, and the ring illumination 456) included in the function portion 400. The main circuit 470 includes the CPU 472 and a memory 474, and performs control processing for implementing the functions (such as imaging of a workpiece in accordance with remote control) of the function portion 400. Thus, the function portion 400 includes devices (such as the imaging unit 446, the coaxial epi-illumination 454, and the ring illumination 456) that operate on the power from the power receiving portion 521 via the second power line 431 connected to the second connector 440.

### [Flow of communication]

The device 600 for the machine tool receives a signal of an imaging instruction from the external device 703, and transmits image data obtained by imaging in accordance with the imaging instruction to the external device 703. Specifically, the external device 703 transmits the signal of the imaging instruction to the CPU 472 by using the aforementioned communication path. Upon receiving the signal of the imaging instruction, the CPU 472 controls the imaging unit 446, the lens 448, the coaxial epi-illumination 454, and the ring illumination 456 to perform imaging operation in accordance with the imaging instruction, and obtains image data from the imaging unit 446. The CPU 472 transmits the image data to the external device 703. In this manner, the CPU 472 (an example of a processor) included in the function portion 400 communicates with the external device 703 via the second communication line 433 connected to the second connector 440.

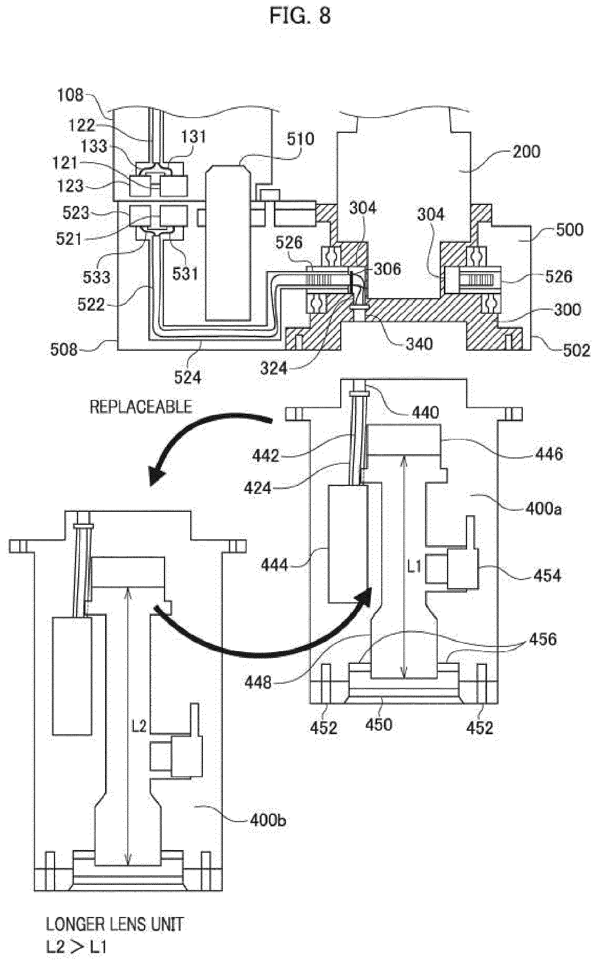

FIG. 8 is a diagram illustrating a function portion 400 that is replaceable.

A function portion 400a that is an imaging device including a lens 448 having a length of L1 can be separated from the rotatable portion 601 by unscrewing of the bolts 402 (see FIG. 3). In addition, the function portion 400a is replaceable with a function portion 400b that is an imaging device including a lens 448 having a length L2 that is longer than L1. The replacing function portion 400b can be fixed to the rotatable portion 601 with the bolts 402. Alternatively, the function portion 400b may be fixed to the rotatable portion 601 with a fitting mechanism that is a mechanical mechanism. In this manner, the function portion 400 is attachable to and detachable from the rotatable portion 601. The function portion 400 is therefore replaceable with another function portion 400.

According to the present embodiment, a feed path using non-contact power supply means is provided, which enables provision of a device for a machine tool that need not include a large battery. Furthermore, a communication path using non-contact communication means is provided, which enables provision of a device for a machine tool capable stably communicating with the external device 703.

### [First Modification]

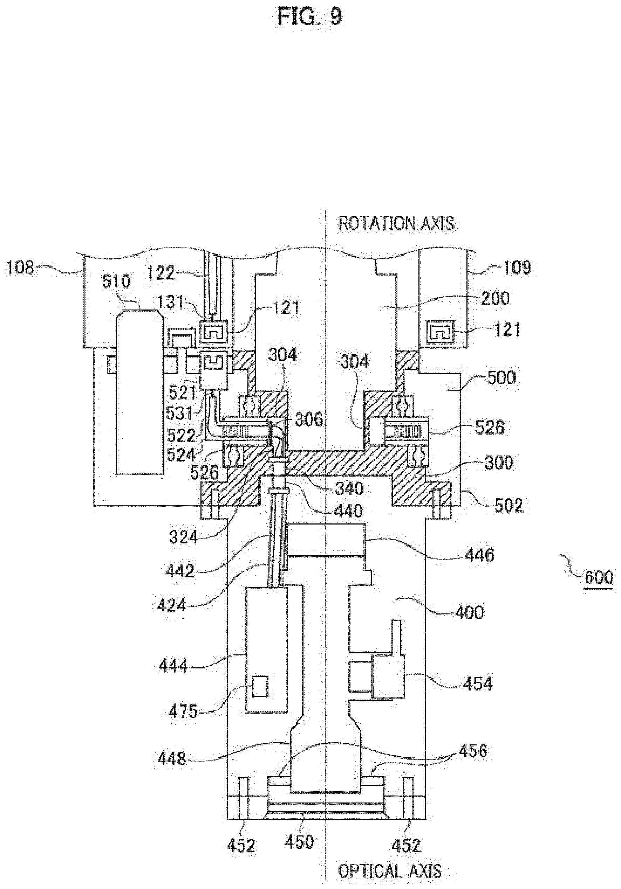

FIG. 9 is a cross-sectional view of wires, electric components, and optical components in a device 600 for a machine tool according to a first modification.

The CPU 472 may perform radio communication with the external device 703. The electric circuit board 444 includes a communication unit 475 for performing radio communication with the external device 703. The CPU 472 is connected with the communication unit 475. The CPU 472 uses the communication unit 475 to perform bi-directional radio communication with the external device 703. The radio communication is performed via a wireless local area network (LAN), for example. As described above, the function portion 400 includes the communication unit that performs radio communication with the external device 703.

The power supply portion 121 may have a ring shape. In this case, a holder 109 having a hollow cylindrical shape integrated with the stopper block 108 and the front cover 102 is provided. The power supply portion 121 is located inside the holder 109 so that the center of the ring shape of the power supply portion 121 agrees with the rotation axis of the rotatable portion 601. The power receiving portion 521 is provided at position close to the power supply portion 121 in the fixed portion 500. While the power receiving portion 521 is provided on the left side of the fixed portion 500 where the positioning portion 510 is present in this example, the power receiving portion 521 may be provided on the right side of the fixed portion 500 where the positioning portion 510 is not present. Only the first power line 531 passes through the cable 522. The first connector 340 and the second connector 440 each include the communication terminal only, and only the second communication line 433 (see FIG. 7) passes through the cable 442.

### [Second Modification]

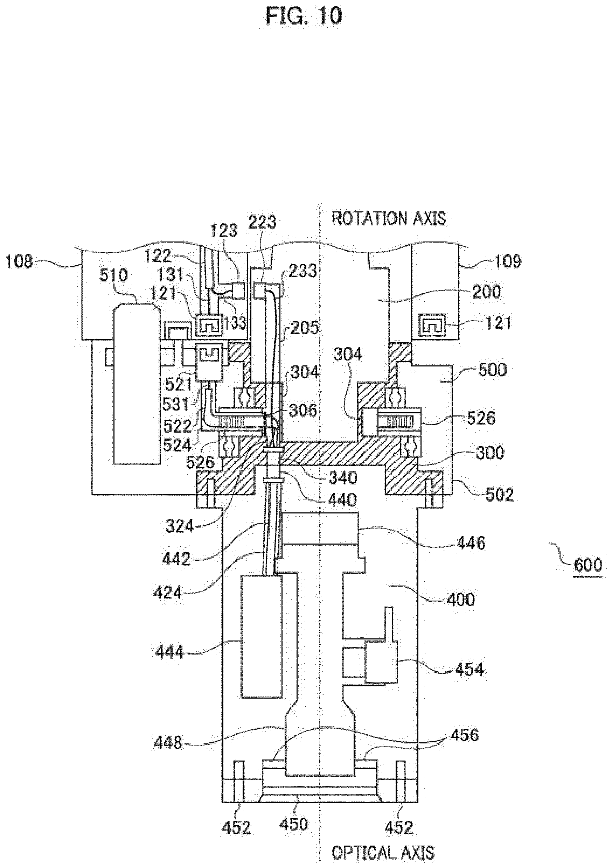

FIG. 10 is a cross-sectional view of wires, electric components, and optical components in a device 600 for a machine tool according to a second modification.

A communication portion 223 may be provided near a side face of the shank portion 200. A third communication line 233 connected to the communication portion 223 passes through a wireway 205 formed in the rotatable portion 601 and is connected to the first connector 340. In a manner similar to the embodiment, the first connector 340 and the second connector 440 each include a communication terminal and a power terminal. The communication portion 123 is provided at a position close to the shank portion 200 inside the stopper block 108. The communication portion 123 and the communication portion 223 communicate with each other in a non-contact manner. The power supply portion 121, the power receiving portion 521, and the first power line 531 are the same as those in the first modification. Thus, the rotatable portion 601 includes the communication portion 223 that can communicate with the spindle 100 in a non-contact manner. The first connector 340 is connected with the communication portion 223 via the third communication line 233. The CPU 472 (an example of a processor) included in the function portion 400 communicates with the external device 703 via the second communication line 433 (see FIG. 7) connected to the second connector 440.

### [Third Modification]

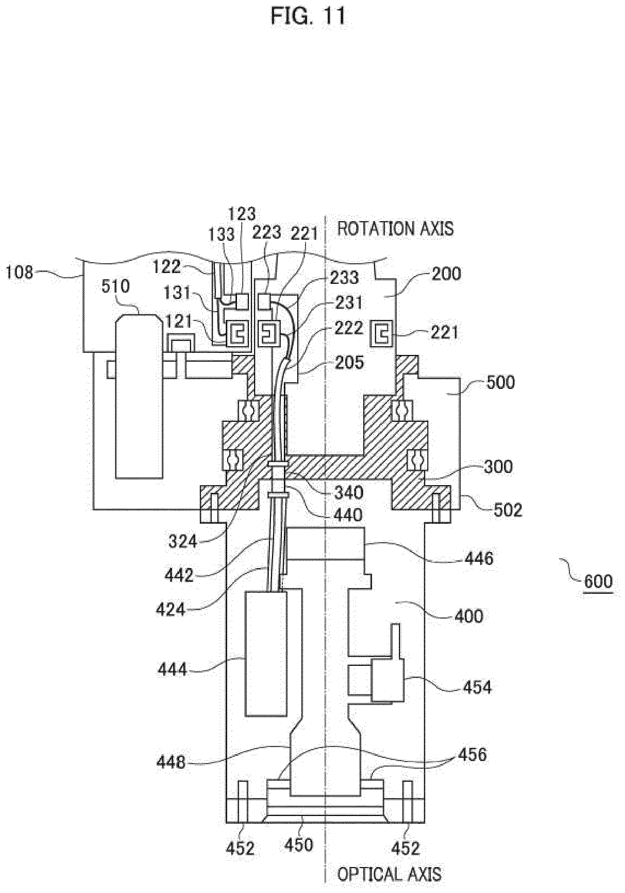

FIG. 11 is a cross-sectional view of wires, electric components, and optical components in a device 600 for a machine tool according to a third modification.

A power receiving portion 221 having a ring shape may be provided near a side face of the shank portion 200. The center of the ring shape of the power receiving portion 221 agrees with the rotation axis of the rotatable portion 601. A third power line 231 connected to the power receiving portion 221 and the third communication line 233 connected to the communication portion 223 are included in a cable 222. The cable 222 is connected to the first connector 340, the first connector 340 and the second connector 440 are the same as those in the embodiment. The power supply portion 121 is located at a position close to the shank portion 200 in the stopper block 108. The power supply portion 121 supplies power to the power receiving portion 221 in a non-contact manner. Because the power receiving portion 221 has a ring shape, power can be always supplied regardless of the orientation of the rotatable portion 601. The communication portion 123, the communication portion 223, and the third communication line 233 are the same as those in the second modification. As described above, the rotatable portion 601 includes the power receiving portion 221 that receives power in a non-contact manner from the spindle 100, and the first connector 340 connected with the power receiving portion 221 via the third power line 231, and is rotatably attached together with the rotatable member 106 of the spindle 100. The rotatable portion 601 further includes the communication portion 223 that can communicate with the spindle 100 in a non-contact manner. The first connector 340 is connected with the communication portion 223 via the third communication line 233. The CPU 472 (an example of a processor) included in the function portion 400 communicates with the external device 703 via the second communication line 433 (see FIG. 7) connected to the second connector 440. The rotatable portion 601 of the device 600 for the machine tool, which includes the power receiving portion 221 that receives power from the spindle 100 in a non-contact manner, together with the rotatable member 106 of the spindle 100 are rotatably attached to the spindle 100. In addition, the spindle 100 includes the power supply portion 121 that transmits power to the power receiving portion 221 in a non-contact manner.

### [Fourth Modification]

A device 600 for a machine tool may be constituted by the rotatable portion 601 and the function portion 400 without the fixed portion 500. In the case of this structure, the whole device 600 for the machine tool rotates with the rotatable member 106. For example, the fixed portion 500 may be omitted from the structure of the third modification (see FIG. 11). In a fourth modification, a battery may be mounted on the device 600 for the machine tool and the battery may be used as a power source. In addition, communication may be performed using a wireless means such as a wireless LAN.

### [Fifth Modification]

FIG. 7 shows an example in which the electric circuit board 444 and the imaging unit 446 are connected with each other by the communication line and the power line. The electric circuit board 444 and the imaging unit 446 may be connected with each other by a universal seral bus (USB) cable including the communication line and the power line.

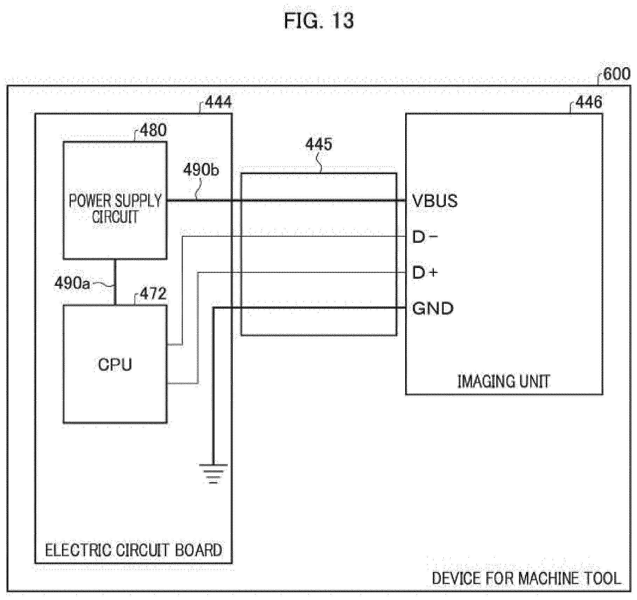

FIG. 13 is a diagram of wiring between the electric circuit board 444 and the imaging unit 446.

The electric circuit board 444 and the imaging unit 446 are connected with each other by a single USB cable 445. The USB cable 445 includes VBUS and GND power lines and D- and D+ communication lines. The VBUS power line 490b connects the power supply circuit 480 with the imaging unit 446. The GND power line is grounded. The D- and D+ communication lines connect the CPU 472 with the imaging unit 446. A USB connector having a VBUS terminal, a GND terminal, a D- terminal, and a D+ terminal may be provided on each or one of endpoints of the USB cable 445. The imaging unit 446 may include a USB connector that can be coupled with the USB connector of the USB cable 445. In addition, the electric circuit board 444 may include a USB connector that can be coupled with the USB connector of the USB cable 445.

A power line 490a (a first power supply line) is a power line for supplying power from the power supply circuit 480 to the CPU 472 (the main circuit 470). In addition, the power line 490b (a second power supply line) is a power line for supplying power from the power supply circuit 480 to the imaging unit 446. The power line 490b may pass through a switch IC for controlling power on/off in accordance with a control signal transmitted from the CPU 472.

The power supply circuit 480 having received power from the external power supply 701 transmits power to the CPU 472 via the power line 490a. Upon receiving power from the power supply circuit 480, the CPU 472 performs a process of booting an operating system (OS). The power supply circuit 480 also supplies power to the imaging unit 446 via the power line 490b in parallel with the OS boot process. Upon receiving power from the power supply circuit 480, the imaging unit 446 starts an operation to activate the imaging unit 446. When the OS boot process and the operation to activate the imaging unit 446 are completed, the imaging unit 446 accepts instructions from an application running on the OS via the D- and D+ communication lines.

As described above, a plurality of power lines, which are the power line 490a and the power line 490b, are provided, and power is supplied from the power supply circuit 480 to the CPU 472 via the power line 490a while power is also supplied from the power supply circuit 480 to the imaging unit 446 via the other power line 490b. Because a plurality of power lines, such as the power line 490a and the power line 490b, are provided, the imaging unit 446 can be activated regardless of the OS boot. In other words, because the power supply circuit 480 supplies power to the CPU 472 via the power line 490a and also supplies power to the imaging unit 446 via the power line 490b, the imaging unit 446 can start the activation operation upon receiving the power supply independently of the OS boot. With this configuration, the imaging unit 446 can be activated either after or during the OS boot of the CPU 472. As a result, the time required for system boot can be shortened.

### [Other modifications]

While an imaging unit including an image sensor such as a CMOS, a lens, an illumination device, and the like has been presented as an example of the function portion 400 in the embodiment, the function portion 400 is not limited to this example. The imaging unit that is the function portion 400 may be an imaging unit for measurement (a measurement probe) or an imaging unit for observation. Alternatively, the function portion 400 may be a laser scanner, a laser generator, an angle head, or the like. Still alternatively, the function portion 400 may be a tool.

In particular, in the case of an image probe for measurement, more lenses are used than in the case of an image probe for observation, and the image probe therefore tends to become long. Furthermore, for an image probe for measurement, the lens system is preferably set so that the imaging area is of the same size as the imaging area of the CMOS. Thus, the lens system needs to be designed to be as parallel as possible to the optical axis to suppress diffusion of light. It is therefore difficult to make the imaging area large. For detailed measurement of one workpiece, a plurality of images of measurement positions of the workpiece may therefore be taken and analyzed.

More than one external device may be connected with the communication line 133. For example, in a first configuration in which a plurality of external devices are connected, a first external device (a first external server or a personal computer, for example) that provides imaging instructions to the device 600 for the machine tool and a second external device (a second external server, for example) that receives imaged data from the device 600 for the machine tool may be connected with the communication line 133. In a second configuration in which a plurality of external devices are connected, a first external device (a first external server, for example) that commands the machine tool with instructions to perform imaging using the device 600 for the machine tool, the machine tool that instructs the device 600 for the machine tool to perform imaging upon receiving the commands from the first external device, and a second external device (a second external server, for example) that receives imaging data from the device 600 for the machine tool may be connected with the communication line 133.

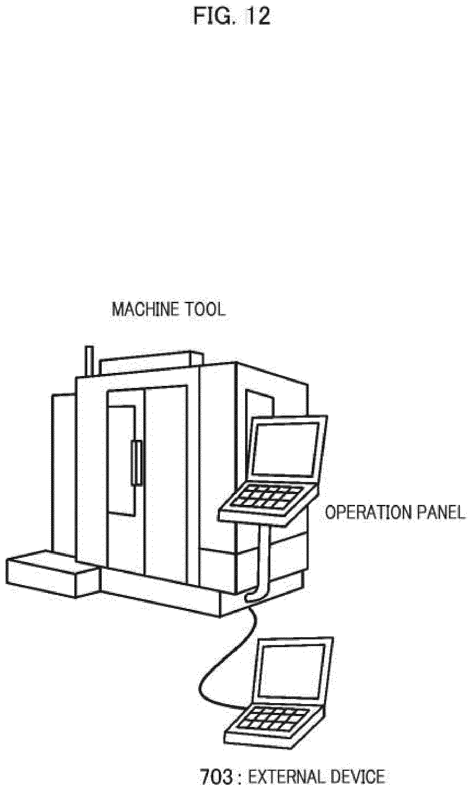

FIG. 12 is an external view of a machine tool.

The machine tool includes a door that can be opened and closed on its front. FIG. 12 shows a state in which the door is open. The machine tool includes an operation panel. In addition, an external device 703 (an information processing device such as a computer, for example) is connected with the machine tool. The manner of connection is an example. The machine tool may have a configuration including information processing functions equivalent to those of the external device 703.

An operator can select an operation of imaging a workpiece with an imaging device during machining. When this operation is selected, image processing for extracting feature points such as edges and faces of a workpiece from a taken image can be performed on an imaging related application. Conventionally, for example, it is difficult to image a workpiece in the machine tool illustrated in FIG. 12 with the door closed. The operator therefore needs to perform imaging while checking the position of the workpiece in a state in which the door is open. In the present embodiment, machining can be temporarily stopped in the state in which the door of the machine tool is closed, and the workpiece can be imaged with the imaging device without the need for opening the door. As a result, the operation can be performed without opening the machining chamber, and the operator can safely perform the operation. Furthermore, after imaging, a correction value for a tool can be modified on the operation panel and machining can be resumed without the need for opening the door. In addition, the operator can not only modify a correction value for a tool but also change the rotating speed of the tool on the operation panel.

According to the embodiment, image processing can be performed by the device for a machine tool, which enables the state of a workpiece to be checked even in a closed space with the door of the machine tool closed. Needless to say, not only the state of a workpiece but also the diameter of the workpiece, the diameter of a hole in the workpiece, and the like can also be detected. Additionally, the position of a table, a coolant discharge position, and the like can also be checked.

Because the function portion 400 is attachable to and detachable from the rotatable portion 601 in the embodiment, a plurality of function portions 400 may be replaced with one another for one rotatable portion 601. For example, a function portion 400X may be attached or a function portion 400Y may be attached to a rotatable portion 601A adapted to a machine tool A. Thus, an operation mode in which the function portion 400X, which is frequently used, is normally attached to the rotatable portion 601A and the function portion 400X is replaced with the function portion 400Y, which is rarely used, when the function portion 400Y is to be used can be considered. Because one rotatable portion 601A can be used with each of the function portions, the cost burden for the user is smaller than a case where a device 600 for a machine tool is provided for each function (a device of a function X for a machine tool A and a device of a function Y for the machine tool A).

One function portion 400 may be shared by two machine tools. For example, in a case where a function portion 400X is used by a machine tool A and a machine tool B, a rotatable portion 601A adapted to the machine tool A and a rotatable portion 601B adapted to the machine tool B are prepared in addition to the function portion 400X. For using the function portion 400X in the machine tool A, the function portion 400X is attached to the rotatable portion 601A. Conversely, for using the function portion 400X in the machine tool B, the function portion 400X is attached to the rotatable portion 601B. Because one function portion 400X can be used with each of the machine tools, the cost burden for the user is smaller than a case where a device 600 for a machine tool is provided for each machine tool (a device of a function X for a machine tool A and a device of the function X for a machine tool B).

In addition, the efficiency of maintenance is also improved. For example, in a case where the rotatable portion 601 has a high durability and the function portion 400 has a low durability, two function portions 400 are prepared for one rotatable portion 601. In addition, a function portion 400 at checking timing is replaced with another function portion 400, which enables the device 600 for the machine tool to be continuously used. Furthermore, the cost is lower than a case where two devices 600 for the machine tool are prepared.

Furthermore, because the components can be used in common, the burden on the manufacturing floor is also reduced. For example, rotatable portions 601A adapted to a machine tool A and rotatable portions 601B adapted to a machine tool B are provided in stock, and function portions 400X and function portions 400Y are also provided in stock. Then, when an order for a device of the function X for the machine tool A is received, a function portion 400X is attached to the rotatable portion 601A before shipping. When an order for a device of the function Y for the machine tool B is received, a function portion 400Y is attached to the rotatable portion 601B before shipping. It is also possible to meet an order for a device of the function Y for the machine tool A or a device of the function X for the machine tool B. In this manner, it is also possible to flexibly meet orders for small-lot production of a wide variety of products.

Function portions 400 to be replaced with each other may be combined in any manner. A function portion 400 may not only be replaced with a different function portion 400, but may also be replaced with an identical function portion 400 like in the example of maintenance. As an example of replacement with a different function portion 400, an imaging unit for measurement and an imaging unit for observation may be replaced with each other. An imaging unit for measurement may be replaced with another type of imaging unit for measurement. An imaging unit may be replaced with a function portion 400 other than an imaging unit. A function portion 400 other than an imaging unit may be replaced with another function portion 400 other than an imaging unit.

In addition, according to the embodiment, because a cable accommodating portion for accommodating the cable wound a plurality of turns with a gap enabling the shape of the cable to be changed depending on the rotation angle of the rotatable portion 601 is provided, the function portion 400 can be turned without damaging the cable.

A device 600 for a machine tool may include a battery. The battery is included in the function portion 400, for example. The imaging unit 446 may be activated with use of the battery as a power source.

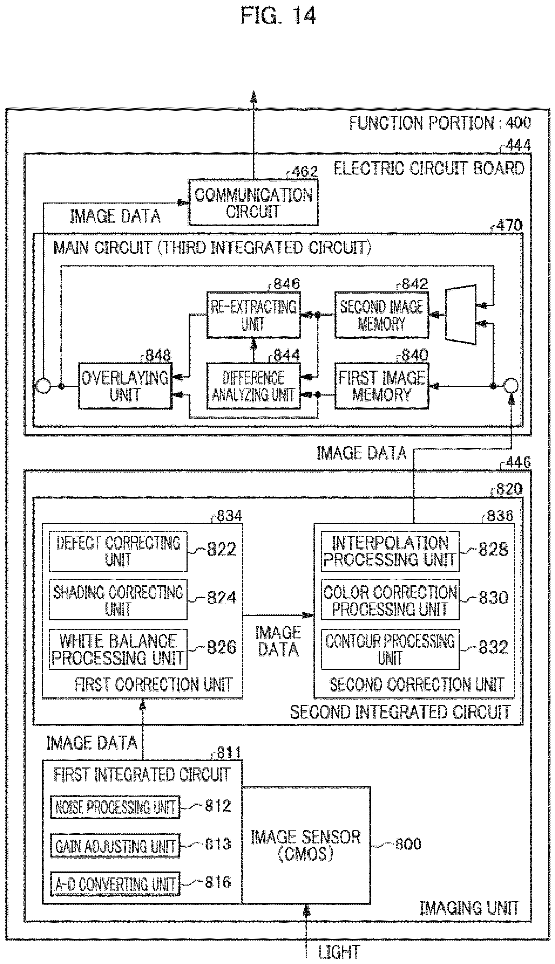

FIG. 14 is a diagram of a configuration if integrated circuits in a function portion 400. In this example, three integrated circuits are included in the function portion 400.

The imaging unit 446 includes an image sensor 800 (a CMOS, for example), a first integrated circuit 811, and a second integrated circuit 820.

The first integrated circuit 811 includes a noise processing unit 812, a gain adjusting unit 813, and an A-D converting unit 816. The first integrated circuit 811 is a circuit for performing noise processing on a signal from the image sensor 800. The noise processing unit 812 removes noise contained in an image obtained from the image sensor 800. The gain adjusting unit 813 adjusts an amplification factor (gain) of current obtained by conversion from light to which the image sensor 800 is exposed. The A-D converting unit 816 converts the image data from analog to digital. For the noise processing unit 812, the gain adjusting unit 813, and the A-D converting unit 816, known technologies may be used. An electrical signal processed by the noise processing unit 812, the gain adjusting unit 813, and the A-D converting unit 816 is passed to the second integrated circuit 820. The first integrated circuit 811 may include a function portion other than the noise processing unit 812, the gain adjusting unit 813, and the A-D converting unit 816.

The second integrated circuit 820 includes a first correction unit 834 and a second correction unit 836. The first correction unit 834 includes a defect correcting unit 822, a shading correcting unit 824, and a white balance processing unit 826, and the second correction unit 836 includes an interpolation processing unit 828, and a color correction processing unit 830, and a contour processing unit 832. The defect correcting unit 822 corrects black defects and white defects on images. The shading correcting unit 824 performs correction on a phenomenon (shading) of signal outputs lowering at the periphery of an image. The white balance processing unit 826 performs correction to adjust the spectral characteristics of the image sensor 800 to human luminous efficiency. For the defect correcting unit 822, the shading correcting unit 824, and the white balance processing unit 826, known technologies may be used. An electrical signal processed by the defect correcting unit 822, the shading correcting unit 824, and the white balance processing unit 826 is passed to the interpolation processing unit 828.

The interpolation processing unit 828 generates RGB output data (bitmap data), which is a typical video signal, from a signal of the RGB Bayer arrangement obtained by color filters of the image sensor 800. The color correction processing unit 830 performs correction to make the spectral characteristics of the color filters of the image sensor 800 closer to ideal characteristics. The contour processing unit 832 performs processing to sharpen the contour of a subject. For the interpolation processing unit 828, the color correction processing unit 830, and the contour processing unit 832, known technologies may be used. An electrical signal processed by the second integrated circuit 820 is output from the imaging unit 446 and input to the main circuit 470 of the electric circuit board 444. The image sensor 800, the first integrated circuit 811, and the second integrated circuit 820 may be configured as a system on chip (SoC). The second integrated circuit 820 may include a function portion other than the defect correcting unit 822, the shading correcting unit 824, the white balance processing unit 826, the interpolation processing unit 828, the color correction processing unit 830, and the contour processing unit 832.

The main circuit 470 may include a third integrated circuit that is not included in the imaging unit 446. A digital circuit illustrated in FIG. 14 is an example of the third integrated circuit. The third integrated circuit is a circuit for performing a process of analyzing image data processed by the imaging unit 446. Thus, the function portion 400 includes the third integrated circuit that performs the process of analyzing image data in addition to the typical imaging unit 446. Functions equivalent to those of the functional units in the illustrated digital circuits illustrated may be implemented by the CPU 472 by executing of programs stored in the memory 474 (FIG. 7). The third integrated circuit may perform any processing, but includes instantly obtaining a plurality of images by a single shutter operation and performing digital processing using the images in this example. For example, a process of reducing noise by averaging a plurality of images taken consecutively with different ISO speeds can be performed. Alternatively, a process of increasing the dynamic range by using a plurality of images taken consecutively with different exposures can also be performed. A dynamic range is the ratio between the largest and smallest values of processable signals, and refers herein to a range of brightness permitted by the image sensor 800. Thus, the digital processing performed by the third integrated circuit improves visualization of an image having a brightness difference that is larger than the range of brightness originally permitted by the image sensor 800.

In the following, an example in which processing for increasing a dynamic range is performed by the main circuit 470 will be explained. Specifically, two image data taken consecutively are partially overlaid on each other, so as to cancel overexposure or underexposure. The main circuit 470 includes a first image memory 840, a second image memory 842, a difference analyzing unit 844, a re-extracting unit 846, and an overlaying unit 848. The first image memory 840 stores first image data serving as basic image data. The second image memory 842 stores second image data to be referred to. The second image data is image data obtained instantly before the first image data, for example. The difference analyzing unit 844 analyzes a difference (an image motion) between the first image data and the second image data to identify an image region of the second image data to be laid over the first image data. The re-extracting unit 846 extracts a partial image to be laid over the first image data from the second image data. The overlaying unit 848 lays the partial image extracted from the second image data over the first image data. In this manner, an image obtained with proper exposure from the second image data can be laid over a part of the first image data where exposure was not proper (an overexposure or underexposure part) to generate an image with no exposure failure as a whole. The image data resulting from digital processing performed by the main circuit 470 are then transmitted from a communication circuit 462.

This application claims priority to Japanese Patent Application No. 2021-158849 filed on September 29, 2021, which is incorporated herein by reference in its entirety.

## Claims

1. A device for a machine tool, the device being attachable to an attachment portion of the machine tool, part of the device being rotatable with a rotatable member in the attachment portion, the device comprising:
a fixed portion including a power receiving portion for receiving power from the attachment portion in a non-contact manner, the fixed portion being attachable to a non-rotating portion of the attachment portion in a fixed manner;
a rotatable portion to be attached so that the rotatable portion is rotatable with the rotatable member, and including a first connector connected with the power receiving portion via a first power line; and
a function portion including a second connector to be coupled with the first connector, and a device that operates on the power obtained from the power receiving portion via a second power line connected to the second connector, the function portion turning with rotation of the rotatable portion in a same direction as a rotating direction of the rotatable portion,
wherein the function portion is attachable to the rotatable portion.

2. The device for the machine tool according to claim 1,
wherein the fixed portion further includes a communication portion capable of communicating with the attachment portion in a non-contact manner,
wherein the first connector is connected with the communication portion via a first communication line, and
wherein the function portion further includes a processor that communicates with an external device via a second communication line connected to the second connector.

3. The device for the machine tool according to claim 1,
wherein the function portion further includes a communication portion capable of performing radio communication with an external device.

4. The device for the machine tool according to claim 1,
wherein the rotatable portion further includes a communication portion capable of communicating with the attachment portion in a non-contact manner,
wherein the first connector is connected with the communication portion via a third communication line, and
wherein the function portion further includes a processor that communicates with an external device via a second communication line connected to the second connector.

5. A device for a machine tool, the device being attachable to an attachment portion of the machine tool and being rotatable with a rotatable member in the attachment portion, the device comprising:
a rotatable portion including a power receiving portion for receiving power from the attachment portion in a non-contact manner, and a first connector connected with the power receiving portion via a third power line, the rotatable portion being attached to be rotatable with the rotatable member; and
a function portion including a second connector to be coupled with the first connector, and a device that operates on the power obtained from the power receiving portion via a second power line connected to the second connector, the function portion turning with rotation of the rotatable portion in a same direction as a rotating direction of the rotatable portion,
wherein the function portion is attachable to the rotatable portion.

6. The device for the machine tool according to claim 5,
wherein the rotatable portion further includes a communication portion capable of communicating with the attachment portion in a non-contact manner,
wherein the first connector is connected with the communication portion via a first communication line, and
wherein the function portion further includes a processor that communicates with an external device via a second communication line connected to the second connector.

7. A machine tool comprising:
an attachment portion including a rotatable member and a non-rotating portion, a device for the machine tool being attachable to the attachment portion, part of the device being rotatable with the rotatable member,
wherein the attachment portion attaches a rotatable portion of the device for the machine tool so that the rotatable portion is rotatable with the rotatable member, attaches a fixed portion of the device for the machine tool including a power receiving portion for receiving power from the attachment portion in a non-contact manner, so that the fixed portion is fixed to the non-rotating portion, and includes a power supply portion for transmitting the power to the power receiving portion in the non-contact manner.

8. A machine tool comprising:
an attachment portion including a rotatable member, a device for the machine tool being attachable to the attachment portion, part of the device being rotatable with the rotatable member,
wherein the attachment portion attaches a rotatable portion of the device for the machine tool including a power receiving portion for receiving power from the attachment portion in a non-contact manner, so that the rotatable portion is rotatable with the rotatable member, and includes a power supply portion for transmitting the power to the power receiving portion in the non-contact manner.
